# FASCICULE DE BREVET EUROPEEN

(11) **EP 3 349 996 B1**
(45) Date de publication et mention de la délivrance du brevet: **10.03.2021**
(21) Numéro de dépôt: 16766942.3
(22) Date de dépôt: 15.09.2016
(51) Int. Cl.: B60C 23/04

(54) **PNEUMATIQUE COMPRENANT UN TRANSPONDEUR PASSIF ET PROCEDE DE LECTURE DES DONNEES**
REIFEN MIT EINGEBETTETEM PASSIVEN TRANSPONDER UND DESSEN VERFAHREN ZUM LESEN VON DATEN
TIRE EMBEDDING A PASSIVE TRANSPONDER AND METHOD FOR READING THE DATA

(30) Priorité: 18.09.2015 FR 1558819
(43) Date de publication de la demande: 25.07.2018
(73) Titulaire: Compagnie Générale des Etablissements Michelin, 63000 Clermont-Ferrand (FR)
(72) Inventeur: LALLEMENT, Philippe, 63040 Clermont-Ferrand Cedex 9 (FR); DESTRAVES, Julien, 63040 Clermont-Ferrand Cedex 9 (FR); MARQUES, Frédéric, 63040 Clermont-Ferrand Cedex 9 (FR); BLONDELET, Michel, 63040 Clermont-Ferrand Cedex 9 (FR); DESMOULIN, Johan, 63040 Clermont-Ferrand Cedex 9 (FR)
(74) Mandataire: Cohen, Sylvia
(86) Numéro de dépôt international: PCT/EP2016/071826
(87) Numéro de publication internationale: WO 2017/046245

(56) Documents cités:
- EP-A1- 0 505 905
- EP-A1- 2 186 658

## Description

### Domaine de l'invention

La présente invention concerne les bandages pneumatiques pour les poids lourds ou engins de chantier équipés de dispositifs d'identification et de communication, et les méthodes de communication de tels objets.

### Arrière plan technologique

Pour le domaine des dispositifs d'identification et de communication, des transpondeurs radio fréquences passifs RFID (acronyme de Radio Frequency Identification) sont classiquement employés, en particulier pour les pneumatiques. Ces dispositifs permettent une gestion automatisée plus fiable et plus rapide des objets en facilitant leur identification, leur suivi et leur gestion. Certains, équipés de fonctions avancées, permettent aussi d'obtenir des grandeurs physiques de l'objet telles que la température ou la pression de gonflage dans le cas des pneumatiques garantissant le bon usage de ces objets au cours de leur cycle de vie. Par la suite on nommera l'ensemble de ces dispositifs par le terme générique de « dispositif électronique de communication passive » ou de « transpondeur passif ».

Ces dispositifs électroniques de communication passive sont constitués généralement d'au moins une puce électronique et une antenne formée par une boucle magnétique ou une antenne rayonnante que l'on fixe à l'objet à identifier. Selon la bande radio fréquence de communication et la distance d'interrogation de ces dispositifs électroniques, on privilégie l'une ou l'autre des antennes. Classiquement dans l'industrie du pneumatique, la bande de fréquence de communication est la bande UHF (acronyme d'Ultra Hautes Fréquences) pour des interrogations en champ lointain par rapport à ces transpondeurs passifs nécessitant l'emploi d'une antenne rayonnante. La bande UHF correspond aux fréquences de communication comprises entre 300 mégahertz et 3 Gigahertz.

L'intégration de tels dispositifs électroniques communiquant dans le bandage pneumatique doit satisfaire à certaines exigences. D'une part, comme le bandage pneumatique est soumis à de fortes sollicitations thermomécaniques, l'intégration d'un dispositif électronique communiquant ne doit pas engendrer de déchéance de l'endurance du bandage pneumatique ou du dispositif électronique et, en particulier, de l'antenne rayonnante. D'autre part, la performance de communication du dispositif électronique doit être suffisante pour interroger aisément le dispositif électronique quelles que soient les conditions d'usage en particulier par l'extérieur du bandage pneumatique.

Ainsi la localisation du dispositif électronique communiquant doit satisfaire à ces contraintes. Tout d'abord, l'intégration dans une zone de faibles sollicitations thermomécaniques du bandage pneumatique est préférable pour ne pas engendrer de fortes contraintes sur le dispositif électronique. En particulier, comme les bandages pneumatiques pour engins de chantier sont soumis à des conditions sévères de roulage sur tout type de route ou chemin, les risques de crevaison ou de perte de pression de gonflage provoquant une mise à plat du bandage pneumatique augmentent. Dans ces cas d'application, la localisation du dispositif électronique ne doit pas endommager davantage le bandage pneumatique. De plus, une zone sans de trop fortes interférences électromagnétiques provoquées par la présence de métal dans le bandage pneumatique est préférable pour la performance de radiocommunication.

On connait dans l'état de l'art, notamment d'après le brevet EP 1977912 B1, un bandage pneumatique équipé d'un tel dispositif électronique de communication passive UHF interrogeable en champ lointain. Le dispositif est logé entre deux masses de gomme isolante et de rigidité adaptée avant d'être positionné à l'intérieur du bandage pneumatique sur la partie extérieure du bandage pneumatique par rapport à la nappe carcasse métallique. Cette position favorise la performance de communication radiofréquence du transpondeur passif en n'interposant pas de zone métallique entre le lecteur radiofréquence et le transpondeur passif.

Cependant, ce dispositif électronique est encore dans une zone de fortes sollicitations mécaniques conduisant à employer des antennes rayonnantes spécifiques. De plus, le dispositif électronique, disposé ainsi n'est pas complètement à l'abri d'avaries mécaniques liées à la projection d'objets divers que l'on peut rencontrer en condition de roulage sévère sur chemin. Enfin, cette solution technique n'est possible qu'en incorporant directement le dispositif électronique lors de la fabrication du bandage pneumatique.

De même, d'après la demande de brevet EP 2873540 A1, un dispositif électronique communiquant répondant à ces contraintes techniques est proposé. Le dispositif électronique est intégré dans la zone basse du pneumatique subissant des niveaux de déformations mécaniques moins élevées que le bloc sommet ou le flanc. Plus précisément, il est positionné au-dessus de la tringle radialement et est fixé sur la paroi intérieure du bandage pneumatique. Cette zone permet de protéger efficacement le dispositif électronique vis-à-vis des chocs générés par des objets propulsés sur le bandage pneumatique au cours de l'usage. Cependant, le dispositif électronique de ce document n'est pas un transpondeur passif UHF interrogeable par un lecteur placé à l'extérieur du pneumatique.

Le document EP0505905A1 divulgue un bandage pneumatique équipé d'un transpondeur radiofréquence muni d'une antenne boucle, refermée sur elle-même fonctionnant à l'aide du champ magnétique. Un protocole de communication du bandage pneumatique est présentée pour illustrer le couplage indirecte de l'antenne boucle du transpondeur par la tringle permettant une interrogation tout autour du tour de roue. Cependant le choix de l'antenne boucle impose de fonctionner en champ proche et donc de positionner l'antenne du transpondeur radiofréquence au plus proche radialement de la tringle qui fonctionne alors comme une antenne boucle de relais. De plus, on fonctionne plutôt dans une gamme de fréquences basses permettant d'employer des niveaux d'énergie plus élevés selon les normes d'émission pour interroger le transpondeur radiofréquence.

Le document EP2186658A1 divulgue un transpondeur radiofréquence passif muni d'une antenne dipôle demi onde. Celle-ci permet une interogation en champ lointain et en particulier d'employer la bande de fréquence UHF. Dans ce cas, le transpondeur radiofréquence est située loin des éléments métalliques de l'enveloppe, c'est à-dire que ces éléments métalliques ne s'interposent pas dans le chemin directe entre le transpondeur radio fréquence intégré au bandage pneumatique et le lecteur d'interrogation extérieur au pneumatique permettant d'optimiser ainsi la performance radiofréquence. Mais, le transpondeur radiofréquence se trouvant dans la partie extérieure du bandage pneuamtique par rapport à la partie principale de la nappe carcasse qui s'étend d'une tringle à l'autre suivant la direction axiale du bandage penumatique, celui-ci est encore soumis à des sollicitations mécaniques élevées en condition d'usage de type hors route comme le cas des pneumatiques de chantier pouvant affecter son intégrité physique.

La présente invention a pour objectif de proposer un bandage pneumatique équipé d'un dispositif électronique de communication passive fonctionnant par exemple en champ lointain dans la gamme de fréquence UHF et répondant aux contraintes d'usage et de communication des bandages pneumatiques pour poids lourd et engin de chantier.

Dans la suite, la lecture sera plus aisée en introduisant les définitions suivantes. On entend ici par l'axe de référence, l'axe de rotation du bandage pneumatique. La direction verticale est la direction normale à la surface de contact entre le bandage pneumatique et le sol en condition d'usage du bandage pneumatique en s'éloignant du sol. Le centre du bandage pneumatique est l'intersection entre l'axe de référence et le plan médian du bandage pneumatique. Ce point géométrique correspond à l'origine des axes. La direction axiale sera la direction parallèle à l'axe de référence en s'éloignant du centre du bandage pneumatique vers le côté extérieur du bandage pneumatique où sont inscrits les marquages normatifs du pneumatique. La direction radiale est une direction perpendiculaire à l'axe de référence en s'éloignant de l'axe de référence. La direction circonférentielle est la direction orthogonale aux directions axiale et radiale. L'azimut d'un point géométrique est l'angle formé par les directions verticale et radiale.

### Description de l'invention

L'invention a pour objet un bandage pneumatique équipé d'un transpondeur passif. Le bandage pneumatique est de forme toroïdale, définissant en tout point les directions axiale, radiale et circonférentielle par rapport à un centre du bandage pneumatique, avec une surface radialement intérieure et une surface radialement extérieure et comprenant un sommet, deux flancs et deux bourrelets. Chaque bourrelet a au moins une tringle annulaire de révolution autour d'un axe de référence définissant la direction axiale depuis le centre du bandage pneumatique, au moins une nappe carcasse de forme toroïdale, au moins une gomme intérieure, au moins un protecteur. Ce protecteur en forme toroïdale est constitué d'au moins une couche en mélange élastomère placée radialement intérieurement à la tringle, la nappe carcasse et la gomme intérieure. Ce protecteur présente une première extrémité, située axialement intérieurement et radialement extérieurement, et une seconde extrémité nommée pointe de gomme située axialement intérieurement et radialement intérieurement. Le transpondeur passif comprend au moins un brin métallique, formant une antenne rayonnante dipôle demi-onde définissant un axe longitudinal et apte à créer un couplage électrique avec une puce électronique. L'axe longitudinal est positionné sensiblement perpendiculaire aux fils de la nappe carcasse. Le transpondeur passif est noyé dans un mélange élastomère isolant électriquement afin de former un patch. Ce patch présente sur sa périphérie une première face localisée axialement extérieurement par rapport au centre du bandage pneumatique, et une seconde face localisée axialement intérieurement, sensiblement perpendiculaires à l'axe de référence. Ce patch définit aussi une première extrémité située radialement intérieurement, respectivement une seconde extrémité située radialement extérieurement par rapport à l'axe de référence qui correspond à la distance minimale, respectivement la distance maximale, entre le patch et l'axe de référence. Ce bandage pneumatique est **caractérisé en ce qu'**au moins l'une des faces du patch s'étend axialement entre l'extrémité axialement intérieure de la nappe carcasse et la surface intérieure du bandage pneumatique et **en ce qu**'au moins l'une des extrémités du patch s'étend radialement à une distance comprise entre celle de la pointe de gomme et celle de l'extrémité radialement extérieure de la tringle.

Selon un mode de réalisation particulier, le transpondeur radiofréquence passif communique par ondes radioélectriques à une fréquence appartenant à la bande des UHF.

On entend par gomme intérieure (en anglais « inner liner ») une couche de gomme étanche en contact avec l'air de la cavité interne du bandage pneumatique. Dans le cas des bandages pneumatiques pour poids lourd ou engins de chantier, la nappe carcasse comporte généralement des fils de renfort métalliques.

Contrairement à l'enseignement des documents cités de l'état de la technique, le positionnement d'un transpondeur passif UHF selon l'invention permet à celui-ci une bonne communication avec un lecteur radiofréquence situé à l'extérieur du bandage pneumatique en dépit des masses métalliques proches ainsi qu'une excellente protection contre toutes les sollicitations thermomécaniques du bandage pneumatique.

Cette localisation autorise aussi l'emploi d'une antenne rayonnante moins sophistiquée puisque les contraintes thermomécaniques qu'elle doit subir sont moins élevées.

On entend ici par le terme « couplage électrique » le transfert d'énergie électrique entre deux milieux que ce transfert soit réalisé par connexion électrique, induction ou rayonnement électromagnétique.

La bande de fréquence des UHF permet à ce jour d'obtenir le meilleur compromis possible entre la taille d'antenne rayonnante et la qualité de la communication radioélectrique lorsque l'antenne est enveloppée dans des mélanges élastomères.

Préférentiellement le couplage électrique entre l'antenne rayonnante et la puce électronique nécessite une antenne additionnelle connectée électriquement à la puce électronique et couplée de façon inductive à l'antenne rayonnante.

Dans ce cas, l'endurance du dispositif électronique selon l'invention est améliorée puisque les connexions mécaniques entre la puce électronique et l'antenne rayonnante sont supprimées. Ainsi, les sollicitations thermomécaniques que subit l'antenne rayonnante n'engendrent pas de fortes contraintes mécaniques au niveau du reste du dispositif électronique.

Ce type d'antenne permet d'obtenir une couverture de territoire importante dans un plan, par exemple le plan radial d'un bandage pneumatique de type radial, puisque le champ rayonné par ce type d'antenne s'apparente à une onde plane omnidirectionnelle perpendiculaire à l'axe de l'antenne. De surcroît, c'est aussi une antenne simple à réaliser du fait de sa géométrie mono directionnelle.

Préférentiellement, l'antenne rayonnante du dispositif électronique est de forme hélicoïdale.

Ainsi, l'endurance mécanique du dispositif électronique se trouve renforcée en facilitant des déformations mécaniques de l'antenne rayonnante sans impacter son fonctionnement. Bien que positionnée dans une zone de faibles sollicitations thermomécaniques en condition d'usage, l'incorporation du dispositif électronique dans le bandage pneumatique avant les opérations de conformation ou de cuisson peut conduire l'antenne rayonnante à subir des déformations thermomécaniques conséquentes qu'elle supporte plus facilement au travers de cette forme géométrique.

Avantageusement, le patch comporte une épaisseur de mélange élastomère isolant électriquement comprise entre 1,5 et 5 millimètres, préférentiellement entre 2 et 4 millimètres.

Ainsi, le dispositif électronique et en particulier l'antenne rayonnante se trouve isolée électriquement de tout matériau conducteur qui perturberait la transmission des ondes radiofréquences entre le lecteur UHF et l'antenne rayonnante. On entend ici par le terme isolant électriquement que la conductivité électrique du mélange élastomère est en deçà du seuil de percolation des charges conductrices du mélange.

De façon préférentielle, la distance entre la face située axialement extérieurement du patch et l'antenne rayonnante du transpondeur passif est au moins de 1 millimètre.

La face définie ici est obligatoirement la partie géométrique du patch la plus profondément ancrée au sein du bandage pneumatique. En incorporant une épaisseur minimale de matériau isolant électriquement suivant cette dimension, entre l'antenne rayonnante du transpondeur passif et les mélanges élastomères du bandage pneumatique contenant des charges conductrices comme par exemple du noir de carbone, on assure un fonctionnement correct de l'antenne rayonnante vis-à-vis des ondes radioélectriques avec lesquelles elle communique. Cette caractéristique renforce donc la performance de communication du transpondeur passif.

Dans un mode de réalisation particulier, la distance entre la face située axialement intérieurement du patch et l'antenne rayonnante du transpondeur passif est au moins de 0,5 millimètre.

La face située axialement intérieurement du patch correspond à la zone la moins enveloppée par les charges conductrices des mélanges élastomères du bandage pneumatique. Ainsi, une épaisseur de 0,5 millimètre d'élastomère isolant électriquement est alors suffisante pour assurer un fonctionnement normal de l'antenne rayonnante du dispositif électronique vis-à-vis des interférences électriques générées par ses charges conductrices.

Dans un mode de réalisation préférentielle, la puce électronique étant connectée à un circuit imprimé pour constituer une carte électronique, le circuit imprimé comporte d'autres composants électroniques actifs ou passifs additionnels.

Ainsi, les fonctions du transpondeur passif sont augmentées par l'ajout de composants tels qu'une mémoire ou des capteurs de toute nature. L'interrogation ou la transmission des données de la carte électronique est assurée par l'antenne rayonnante.

Préférentiellement, l'extrémité située radialement intérieurement du patch est située radialement à une distance, au moins cinq millimètres, de la pointe de gomme du protecteur.

Ainsi, l'endurance du dispositif électronique se retrouve renforcée puisque la zone de contact entre la jante et le bandage pneumatique potentiellement fortement sollicitée au cours de l'usage du bandage pneumatique n'est pas le lieu d'implantation du dispositif électronique.

Selon un mode de réalisation préférentiel, le patch est fixé au niveau de la face située axialement extérieurement sur la surface intérieure du bandage pneumatique.

Ainsi, le dispositif électronique contenu dans le patch peut être inséré dans le bandage pneumatique après sa fabrication. De ce fait, les spécifications mécaniques des composants du dispositif électronique sont plus souples permettant l'emploi de solutions techniques plus simples et moins onéreuses.

Selon un mode de réalisation très spécifique, le patch est positionné sur la surface intérieure du bandage pneumatique entre la pointe de gomme et l'extrémité située radialement extérieurement et axialement intérieurement du protecteur.

Dans ce cas, le patch est fixé entièrement sur un seul composant du bandage pneumatique, en l'occurrence le protecteur, ce qui permet de rendre homogène chimiquement et mécaniquement l'ensemble de la liaison entre le bandage pneumatique et le patch. De ce fait, en évitant les zones de raccordement avec des composants différents tels par exemple la gomme intérieure et le protecteur, l'endurance mécanique de la liaison entre le patch et le bandage pneumatique est renforcée.

Préférentiellement, le patch peut être constitué d'un mélange élastomère comprenant au moins un des éléments parmi ; le caoutchouc naturel, le butyle et l'éthylène-propylène-diène-monomère.

Dans le cas de bandages pneumatiques de chantier qui peuvent être mis en contact avec du tyre life, le patch est avantageusement à base d'éthylène-propylènediène-monomère. Cet élastomère est en effet résistant au glycol constituant de ce tyre life.

Selon un mode de réalisation particulier, le patch est fixé à la surface interne du pneumatique par une gomme de liaison dont l'épaisseur est au moins de 0,5 millimètre.

L'invention a aussi pour objet un procédé de lecture des données contenues dans un transpondeur passif incorporé dans un bandage pneumatique monté sur une roue métallique et gonflé, comprenant les étapes suivantes :
- Repérer sur le bandage pneumatique la position angulaire d'implantation du transpondeur passif ;
- Positionner un lecteur radiofréquence comprenant une antenne rayonnante perpendiculairement à la surface extérieure du bandage pneumatique en positionnant l'antenne rayonnante à une distance inférieure ou égale à 20 centimètres, préférentiellement inférieure ou égale à 10 centimètres et très préférentiellement inférieure ou égale à 5 centimètres de la surface extérieure au niveau du plan radial d'implantation du transpondeur passif ;
- Balayer radialement la surface extérieure depuis la mi-hauteur du bandage pneumatique vers l'axe de référence ; et
- Enregistrer les informations transmises par le transpondeur passif en réponse au signal d'interrogation du lecteur radiofréquence.

Selon un mode particulier, l'antenne rayonnante du lecteur radiofréquence est positionnée en contact sur la surface externe du bandage pneumatique.

Ici, le système de lecture et l'antenne rayonnante du lecteur radiofréquence sont configurés à la fréquence de fonctionnement du transpondeur passif enveloppé dans un mélange élastomère isolant électriquement. Ainsi, la lecture par l'extérieur du bandage pneumatique est possible alors que l'homme du métier ne s'attend pas à recevoir, quelle que soit la puissance émise par le lecteur radiofréquence et admissible selon la norme ETSI 302 208, de signaux en réponse de la part du transpondeur passif en ayant placé le patch dans cette zone géographique du bandage pneumatique.

Le repérage de la position angulaire du transpondeur passif peut être effectué manuellement ou automatiquement à l'aide de marquage spécifique sur le bandage pneumatique ou par tout moyen de détection du transpondeur passif tels que par exemple les rayons X.

Le positionnement et le balayage du lecteur radiofréquence sur la surface extérieure du bandage pneumatique sont manuels ou automatisé.

Ce protocole de lecture permet d'une part de se situer en champ lointain vis-à-vis du transpondeur passif et d'autre part de modifier la distance du cheminement des ondes de radiocommunication de l'ordre de la longueur d'onde de ces ondes. Ceci permet de trouver une distance optimale entre le lecteur radiofréquence et le transpondeur passif minimisant les effets néfastes de la réflexion des ondes radioélectriques sur les matériaux conducteurs.

La distance entre l'antenne rayonnante du lecteur radiofréquence et la surface extérieure du bandage pneumatique influe sur l'intensité des ondes radioélectriques directes et réfléchies qui parviennent jusqu'au transpondeur passif. Suivant l'énergie d'activation nécessaire à ce transpondeur passif, conditionnée par la sensibilité de la puce électronique en particulier, il est possible de moduler la distance entre le lecteur radiofréquence et le bandage pneumatique. Pour une puce électronique économe en énergie, et un bandage pneumatique peu dissipatif la lecture des données du transpondeur passif sont possibles jusqu'à une distance de 20 centimètres de la surface du bandage pneumatique. En revanche le positionnement de l'antenne rayonnante du lecteur radiofréquence en contact sur la surface extérieure du bandage pneumatique est une condition privilégiée en terme de transmission d'énergie.

### Description brève des dessins

L'invention sera mieux comprise à la lecture de la description des dessins qui va suivre. Ces descriptions sont données uniquement à titre d'exemple et faites en se référant aux figures annexées dans lesquelles :
- La figure 1 présente une coupe tridimensionnelle d'un bandage pneumatique;
- La figure 2 présente une vue en perspective dans le repère tournant avec des arrachements au niveau de la zone basse d'un bandage pneumatique selon l'invention ;
- La figure 3 présente une vue en coupe radiale au niveau de la zone basse d'un bandage pneumatique selon l'invention ;
- La figure 4 présente une vue éclatée d'un patch selon l'invention;
- La figure 5 présente un graphe de la puissance radioélectrique d'activation transmise à un transpondeur passif UHF placé dans le bandage pneumatique selon l'invention en fonction de la bande de fréquence d'observation.

### Description détaillée de modes de réalisation

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »).

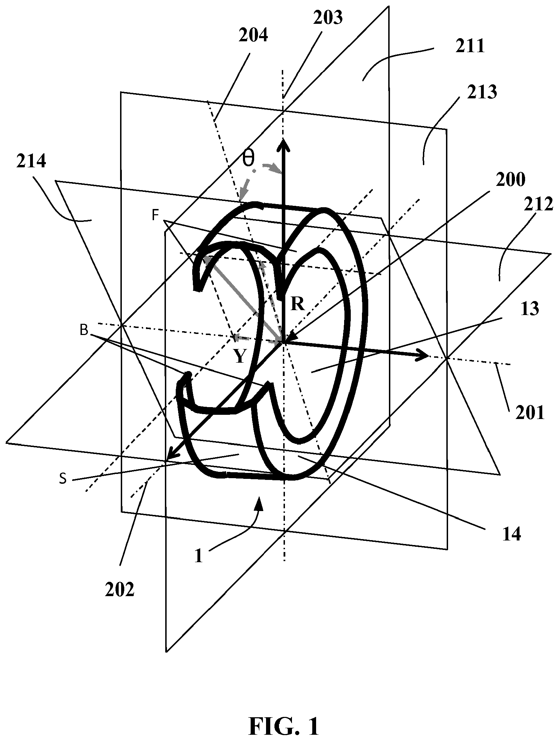

La figure 1 présente une coupe d'un bandage pneumatique 1 selon l'invention comprenant un sommet S prolongé par deux flancs F et se terminant par deux bourrelets B. En l'espèce, le pneumatique 1 est destiné à être monté sur une roue 8 de véhicule de type poids lourd ou engin de chantier, qui n'est pas représentée sur cette figure, au niveau des deux bourrelets B. On délimite ainsi une cavité C fermée, contenant au moins un fluide sous pression, délimitée à la fois par la surface intérieure 13 du bandage pneumatique 1 et par la surface externe de la roue 8 du véhicule.

On notera l'axe de référence 201 correspondant à l'axe naturelle de rotation du bandage pneumatique et le plan médian 211, perpendiculaire à l'axe de référence 201 et équidistant des deux bourrelets. L'intersection de l'axe de référence 201 par le plan médian 211 détermine le centre du bandage pneumatique 200. On définira un repère cartésien au centre du bandage pneumatique 200 constitué de l'axe de référence 201, d'un axe vertical 203 perpendiculaire au sol et d'un axe longitudinal 202 perpendiculaire aux deux autres axes. Et, on définira le plan axial 212 passant par l'axe de référence 201 et l'axe longitudinal 202, parallèle au plan du sol et perpendiculaire au plan médian 211 Enfin on appellera plan vertical 213, le plan perpendiculaire à la fois au plan médian 211 et au plan axial 212 passant par l'axe vertical 203.

Tout point matériel du bandage pneumatique 1 est défini de façon unique par ses coordonnées cylindriques (Y, R, θ). Le scalaire Y représente la distance axiale au centre du bandage pneumatique 200 dans la direction de l'axe de référence 201 définie par la projection orthogonale du point matériel du pneumatique 1 sur l'axe de référence 201. On définira un plan radial 214 faisant un angle θ par rapport au plan vertical 213 autour de l'axe de référence 201. Le point matériel du bandage pneumatique 1 est repéré dans ce plan radial 214 par la distance R au centre du bandage pneumatique dans la direction perpendiculaire à l'axe de référence 201 identifiée par la projection orthogonale de ce point matériel sur l'axe radial 204.

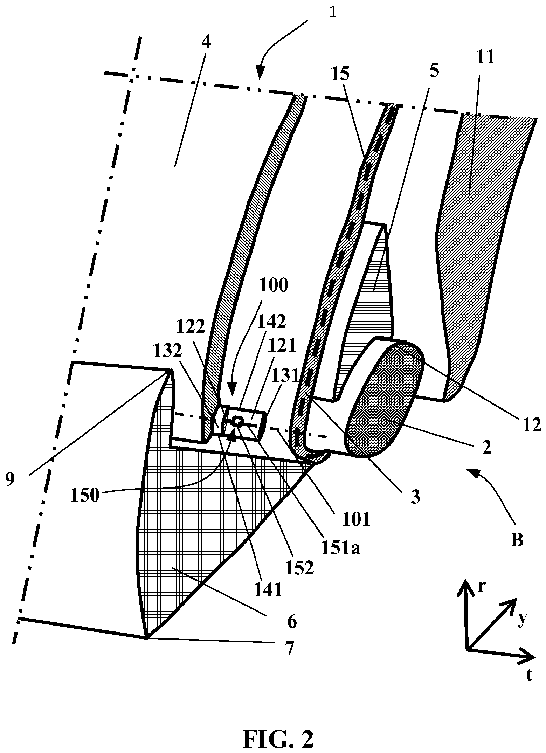

La figure 2 présente une vue en perspective avec arrachement d'un bourrelet B observée depuis la cavité C du bandage pneumatique 1 selon l'invention. Ce bourrelet B comprend d'une tringle annulaire 2 en métal et divers composants élastomères dont une nappe carcasse 3, une gomme intérieure 4, un protecteur 6, un bourrage tringle 5 et un flanc 11. L'orientation des fils de renfort métalliques 15 de la nappe carcasse 3 est indiquée par les traits pointillés. Les fils 15 sont ici orientés radialement ce qui correspond à un bandage pneumatique 1 de type radial. On distingue nettement la pointe de gomme 7 et l'extrémité radialement extérieure et axialement intérieure 9 du protecteur 6. Ce bandage pneumatique possède aussi un patch 100 incluant un transpondeur passif 150 comprenant une antenne rayonnante 151 constitués de deux brins métalliques de longueur égale incrémentés a et b et au moins une puce électronique 152 couplée à l'antenne rayonnante 151 et enrobée par une masse 180 rigide et isolante électriquement à base, par exemple, de résine époxy. L'axe longitudinal 101 de l'interface 100 est défini par l'axe de l'antenne rayonnante 151 du dispositif électronique 150. Dans cet exemple de bandage pneumatique 1, le patch 100 est positionné circonférentiellement. Le patch 100 comprend, du fait de l'arrachement, une première masse 121 et une seconde masse 122 en matériau élastomère isolant électriquement et de rigidité adaptée aux composants élastomères du bourrelet B enveloppant le dispositif électronique 150. Ici la face axialement extérieure 131 du patch 100 est positionnée sur la nappe carcasse 3. Axialement, cette face 131 se situe au minimum des positions axiales de la nappe carcasse 3. Radialement, les extrémités inférieure 141 et supérieure 142 de patch 100, selon la direction radiale, sont placées à une distance comprise entre celle de la pointe de gomme 7 et l'extrémité supérieure de la tringle 12. Le patch 100 est recouvert par la gomme intérieure 4 du bandage pneumatique 1 au niveau de la face axialement intérieure 132. Ainsi cet exemple correspond à l'insertion totale d'un patch 100 comprenant un transpondeur passif 150, à l'intérieur de la structure du bandage pneumatique 1.

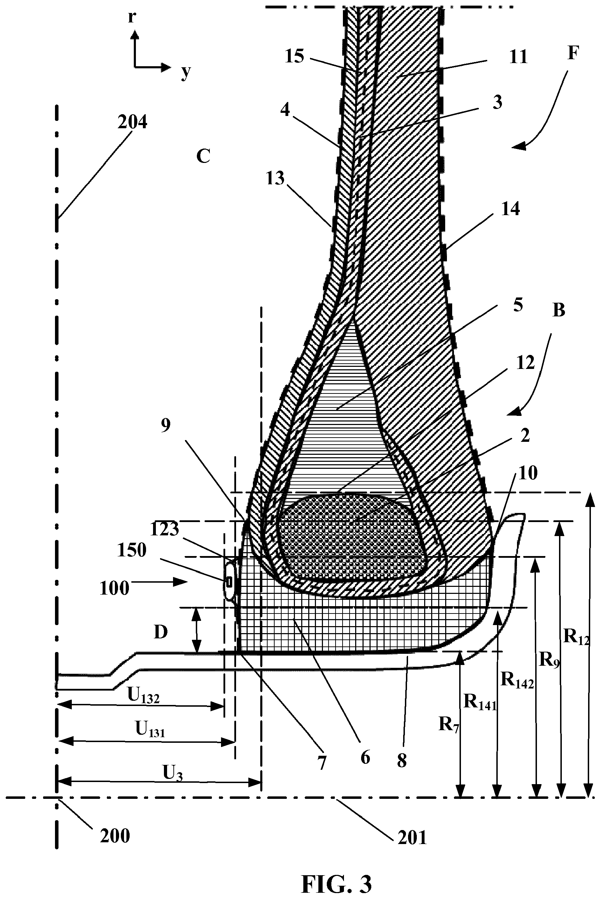

La figure 3 correspond à une coupe dans le plan radial 214 d'un bandage pneumatique 1 passant par le patch 100 au niveau du bourrelet B et d'une partie du flanc F située en dessous de la mi-hauteur du bandage pneumatique 1 où se termine verticalement la coupe. Ce bandage pneumatique 1, monté sur une roue 8 et gonflé à la pression de service comprend une tringle annulaire 2 en métal et divers composants élastomères dont une nappe carcasse 3, une gomme intérieure 4, un protecteur 6, un bourrage tringle 5 et un flanc 11. L'orientation des fils métalliques 15 de la nappe carcasse 3 est définie par les traits pointillés. Ces fils 15 sont positionnés dans le plan radial 214 correspondant à un pneumatique de type radial.

Le patch 100 dont l'axe longitudinal 101, défini par l'antenne rayonnante 151 est dans notre cas d'application perpendiculaire au plan radial 214, comprend ici un transpondeur passif 150 noyé dans un mélange élastomère isolant électriquement. et une gomme de liaison 123 recouvrant partiellement le mélange élastomère. Cette gomme de liaison 123 est positionnée sur la surface intérieure 13 du bandage pneumatique 1 au niveau du protecteur 6. Plus précisément, elle est située entre la pointe de gomme 7 et l'extrémité radialement extérieure et axialement intérieure 9 du protecteur 6 sensiblement à une distance radiale D de la pointe de gomme 7 en contact avec la roue 8. Cette distance D est obtenue par la différence des positions radiales, entre l'extrémité radialement inférieure 141, notée R₁₄₁, du patch 100 et la pointe de gomme 7, notée R₇. Le mélange élastomère isolant électriquement et dont la rigidité mesurée en shore A est comprise en 30 et 80, est réalisé ici préférentiellement en EPDM. La gomme de liaison 123 est usuellement à base de caoutchouc naturel. On définit la position axiale de la face radialement extérieure 131, respectivement intérieure 132, noté U₁₃₁, respectivement U₁₃₂, du patch 100 comme la moyenne des distances axiales de la face obtenues par projection orthogonale sur l'axe de référence 201. Ici, les deux faces 131 et 132 du patch 100 sont axialement situées à une distance inférieure à l'extrémité axialement intérieure de la nappe carcasse 3, notée U₃, comprise entre la mi-hauteur du bandage pneumatique 1 et la roue 8. Dans notre cas, les deux extrémités radialement intérieures 141 et extérieure 142 du patch 100 sont situées à une distance radiale R comprise entre celle de la pointe de gomme 7, notée R₇, et celle de l'extrémité située radialement extérieure et axialement intérieur 9 du protecteur 6, notée R₉, tout étant inférieure à la position radiale de l'extrémité radialement extérieure de la tringle 12, notée R₁₂.

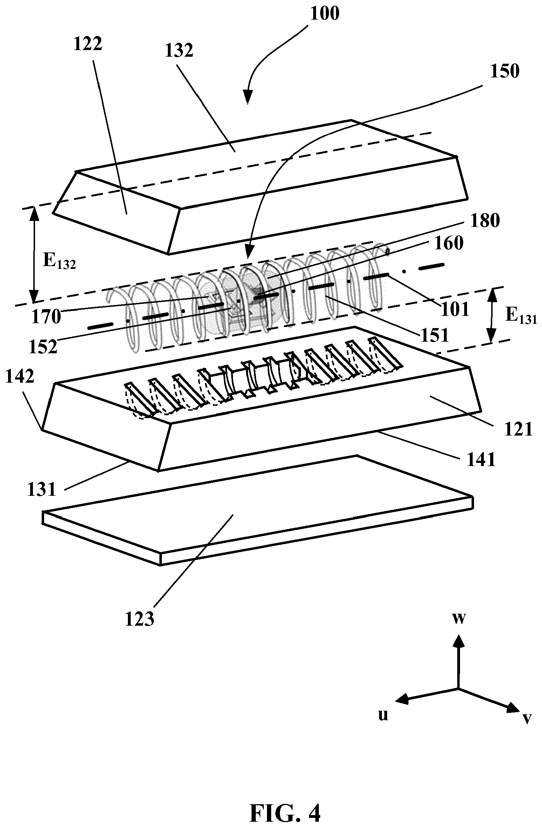

La figure 4 est une vue éclatée en perspective d'un patch 100 selon l'invention. Le patch 100 comprend ici un dispositif électronique 150 constitué d'une antenne rayonnante 151 monobrin en acier de formé hélicoïdale définissant un dipôle électrique demi-onde. L'orientation de l'antenne rayonnante 151 représente l'axe longitudinal 101 du patch 100, noté u. Cette antenne rayonnante 151 est connectée par couplage inductif à une antenne additionnelle 160 reliée électriquement à la puce électronique 152 par l'intermédiaire d'un circuit imprimé 170. La puce électronique 152, l'antenne additionnelle 160 et le circuit imprimé 170 sont englobés dans une masse rigide et isolante électriquement 180, par exemple en résine époxy. L'antenne rayonnante 151 est intercalée ici entre une première masse 121 et une seconde masse 122, toutes les deux en mélange élastomère isolant électriquement, par exemple à base d'EPDM peroxyde. La direction parallèle à l'épaisseur de ces masses constitue l'axe vertical noté w dont le sens positif va de la première masse 121 vers la seconde masse 122. Enfin l'axe transversal, noté v, s'obtient afin de former un trièdre direct avec les axes u et w. Si ce patch est destiné à être implanté dans un bandage pneumatique 1 de type radial, on définit la face axialement extérieure 131 du patch 100 comme la surface inférieure de la première masse 121 selon la direction w. De même, la face axialement intérieure 132 du patch 100 correspond ici à la surface supérieure de la seconde masse 122 selon la direction w. Et, l'extrémité radialement intérieure 141, respectivement radialement extérieure 142, du patch 100 est constituée ici par le bord inférieure de la première masse 121 dans le sens positif, respectivement négatif, de l'axe transversal v. Enfin, la distance minimale, notée E₁₃₁, est définie ici par la différence de position verticale entre l'antenne rayonnante 150 et la face axialement extérieure 131 du patch 100. De même, la distance minimale, notée E₁₃₂, est définie ici par la différence de position verticale entre l'antenne rayonnante 150 et la face axialement intérieure 132 du patch 100. Dans le cas d'un pneumatique de type radial, l'axe longitudinal u, l'axe transversal v et l'axe vertical w du patch 100 seront orientés respectivement suivant l'axe circonférentiel 205, l'axe radial 204 et l'axe de référence 201 du bandage pneumatique 1.

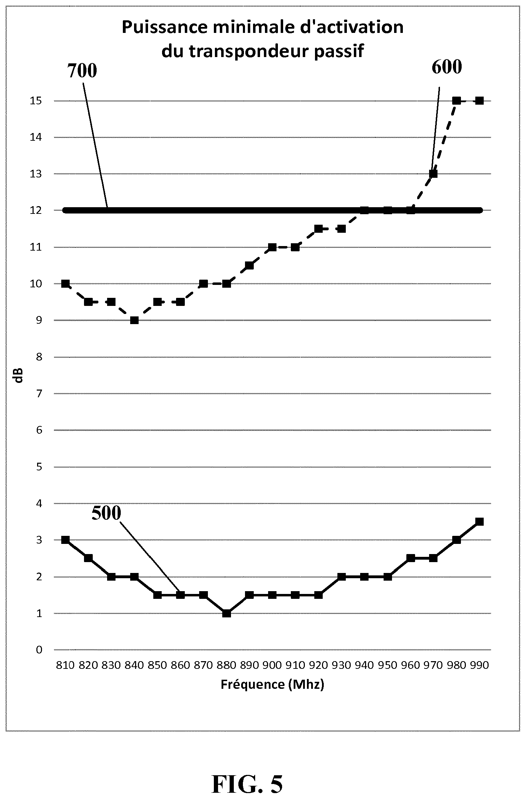

La figure 5 est un graphe représentant la puissance d'activation du transpondeur passif 150 en fonction de la fréquence des ondes radioélectriques émises par une antenne interrogative. Pour ce faire, on emploie un lecteur radiofréquence capable d'émettre une puissance radioélectrique prescrite et constante sur une plage de fréquence étendue autour de 900 Mhz. Conformément au protocole de communication selon l'invention, l'antenne de ce lecteur radiofréquence se trouve en contact sur la surface extérieure 14 du bandage pneumatique 1 monté sur une roue 8 de véhicule et gonflé à la pression de service. Pour chaque niveau de puissance et chaque fréquence d'émission des ondes radioélectriques, on observe la réponse du transpondeur passif 150. Ce graphe représente en échelle logarithmique, exprimé en décibel, la puissance minimale d'émission des ondes radioélectriques pour activer le transpondeur passif 150 pour une même distance d'interrogation. Dans notre cas, le transpondeur passif 150 employé comprend une antenne rayonnante 151 bi brins en acier de forme hélicoïdale de longueur 50 millimètres noyée dans un mélange à base d'EPDM isolant électriquement ayant une épaisseur 3,5 millimètres en recouvert partiellement par une gomme de liaison (123) de 0,5 millimètre. Le patch 100, ainsi constitué, placé perpendiculairement aux fils métalliques (15) de la nappe carcasse 3 d'un bandage pneumatique (1) de type radial, de marque Michelin de dimension 59/80 R63 monté sur une roue en acier en montage seat à plat de diamètre 63 pouces est positionnée sur la surface intérieure 13 de cet ensemble monté à une distance de 45 millimètres de la pointe de gomme 7 et en dessous de l'extrémité radialement extérieure et axialement intérieure 9 du protecteur 6. Aux incertitudes de pose et de position du patch 100, on peut considérer que la distance entre le transpondeur radiofréquence 150 et l'antenne interrogative, placée sur la surface extérieure 14 et à mi-hauteur du bandage pneumatique 1 est constante. La courbe continue 500 représente la puissance d'émission nécessaire à l'activation d'un transpondeur passif 150 lorsque l'antenne rayonnante 151 est positionné à une distance d'au moins 1,5 millimètres de la face axialement extérieure 131 du patch 100. La courbe pointillée 600 est la puissance d'émission radioélectrique nécessaire pour activer un transpondeur passif 150 dont l'antenne rayonnante 151 se situe à une distance inférieure à 0,5 millimètre de la face axialement extérieure 131 du patch 100. Enfin la courbe 700 indique la puissance maximale admissible selon la norme ETSI 302 208.

Tout d'abord on constate qu'il faut au moins quatre fois plus de puissance de rayonnement pour activer le transpondeur passif 150 lorsque son antenne rayonnante 151 n'est pas suffisamment enfouie à l'intérieur du patch 100. Ensuite cela se traduit aussi par une perturbation de la résonance de l'antenne rayonnante 151 du transpondeur passif 150 qui est décalée d'environ 40 Mhz entre les deux configurations d'implantation de l'antenne rayonnante 151 comme l'illustre la position fréquentielle du minimum des courbes 500 et 600. Ces exemples montrent que l'interrogation d'un transpondeur passif 150 localisé sur la surface intérieure 13 d'un bandage pneumatique 1 au niveau du protecteur 6 est possible tout en respectant les normes des puissances radioélectriques d'émission. Cependant, la performance de communication d'un tel transpondeur passif 150 sera fortement influencée par les caractéristiques du patch 100 dans lequel il est inséré.

## Revendications

1. Bandage pneumatique (1) équipé d'un transpondeur passif (150), ledit bandage pneumatique (1) de forme toroïdale, définissant en tout point les directions axiale, radiale et circonférentielle par rapport à un centre (200) du bandage pneumatique (1), ayant une surface radialement intérieure (13) et une surface radialement extérieure (14), comprenant un sommet (S), deux flancs (F) et deux bourrelets (B), chaque bourrelet (B) ayant au moins une tringle (2) annulaire de révolution autour d'un axe de référence (201) définissant la direction axiale depuis le centre (200) dudit bandage pneumatique (1), au moins une nappe carcasse (3) de forme toroïdale, au moins une gomme intérieure (4), au moins un protecteur (6) en forme toroïdale constitué d'au moins une couche en mélange élastomère placée radialement intérieurement à ladite tringle (2), ladite nappe carcasse (3) et ladite gomme intérieure (4), comportant une première extrémité (9), située axialement intérieurement et radialement extérieurement, et une seconde extrémité nommée pointe de gomme (7) située axialement intérieurement et radialement intérieurement, ledit transpondeur passif (150) comprenant au moins un brin métallique formant une antenne rayonnante (151) dipôle demi-onde définissant un axe longitudinal (101) et apte à créer un couplage électrique avec au moins une puce électronique (152), ledit axe longitudinal (101) est positionné sensiblement perpendiculaire aux fils (15) de ladite nappe carcasse (3), ledit transpondeur passif (150) étant noyé dans un mélange élastomère isolant électriquement formant un patch (100), présentant sur sa périphérie une première face (131) localisée axialement extérieurement par rapport au centre (200) et une seconde face (132) localisée axialement intérieurement par rapport au centre (200), sensiblement perpendiculaires audit axe de référence (201), au moins une extrémité située radialement intérieurement (141), respectivement une extrémité située radialement extérieurement (142), par rapport à l'axe de référence (201) correspondant à la distance minimale, respectivement la distance maximale, entre ledit patch (100) et ledit axe de référence (201), **caractérisé en ce qu'**au moins l'une des faces (131,132) du patch (100) s'étend axialement entre l'extrémité axialement intérieure de la nappe carcasse (3) et la surface intérieure (13) du bandage pneumatique (1) et **en ce qu**'au moins l'une des extrémités (141, 142) du patch (100) s'étend radialement à une distance comprise entre celle de la pointe de gomme (7) et celle de l'extrémité radialement extérieure de la tringle (12).

2. Bandage pneumatique (1) selon la revendication 1, dans lequel le transpondeur radiofréquence passif (150) communique par ondes radioélectriques à une fréquence appartenant à la bande des UHF.

3. Bandage Pneumatique (1) selon l'une des revendications précédentes dans lequel le couplage électrique entre ladite antenne rayonnante (151) et ladite puce électronique (152) nécessite une antenne additionnelle connectée électriquement à ladite puce électronique (152) et couplée de façon inductive à ladite antenne rayonnante (151).

4. Bandage pneumatique (1) selon l'une des revendications précédentes, dans lequel, ladite antenne rayonnante (151) dudit transpondeur passif (150) est de forme hélicoïdale.

5. Bandage pneumatique (1) selon l'une des revendications précédentes, dans lequel ledit patch (100) comporte une épaisseur de mélange élastomère isolant électriquement supérieure ou égale à 1,5 millimètres et inférieure ou égale à 5 millimètres..

6. Bandage pneumatique (1) selon l'une des revendications précédentes dans lequel la distance entre ladite face située axialement extérieurement (131) dudit patch (100) et ladite antenne rayonnante (151) dudit transpondeur passif (150) est au moins de 1 millimètre.

7. Bandage pneumatique (1) selon l'une des revendications précédentes dans lequel la distance entre ladite face située axialement intérieurement (132) dudit patch (100) et ladite antenne rayonnante (151) dudit transpondeur passif (150) est au moins de 0,5 millimètre.

8. Bandage pneumatique (1) selon l'une des revendications précédentes dans lequel, la puce électronique (152) étant connectée électriquement à un circuit imprimé pour constituer une carte électronique, ledit circuit imprimé comporte un ou plusieurs composants électroniques passifs ou actifs additionnels.

9. Bandage pneumatique (1) selon l'une des revendications précédentes, dans lequel l'extrémité située radialement intérieurement (141) dudit patch (100) est située radialement à une distance (D), d'au moins cinq millimètres, de ladite pointe de gomme (7) dudit protecteur (6).

10. Bandage pneumatique (1) selon l'une des revendications précédentes, dans lequel ledit patch (100) est fixé au niveau de ladite face située axialement extérieurement (131) sur la surface intérieure (13) dudit bandage pneumatique (1).

11. Bandage pneumatique (1) selon la revendication 9, dans lequel, ledit patch (100) est positionné sur la surface intérieure (13) dudit bandage pneumatique (1) entre ladite pointe de gomme (7) et ladite extrémité située radialement extérieurement et axialement intérieurement (9) dudit protecteur (6).

12. Bandage pneumatique (1) selon l'une quelconque des revendications précédentes dans lequel, ledit patch100) est constitué d'un mélange élastomère comprenant au moins un des éléments parmi : le caoutchouc naturel, le butyle et l'éthylène-propylènediène-monomère.

13. Bandage pneumatique (1) selon la revendication 11, dans lequel ledit patch (100) est au moins partiellement recouvert par une gomme de liaison (123) dont l'épaisseur est au moins de 0,5 millimètre.

14. Procédé de lecture des données contenues dans un transpondeur passif incorporé dans un bandage pneumatique (1) selon l'une des revendications précédentes, monté sur une roue métallique (8) et gonflé comprenant les étapes suivantes:
- Positionner un lecteur radiofréquence comprenant une antenne rayonnante perpendiculairement à la surface extérieure (14) du bandage pneumatique (1) en positionnant ladite antenne rayonnante à une distance inférieure ou égale à 20 centimètres de ladite surface extérieure (14) au niveau du plan radial d'implantation dudit transpondeur passif (150) ;
- Balayer radialement ladite surface extérieure (14) depuis la mi-hauteur dudit bandage pneumatique (1) vers l'axe de référence (201).

15. Procédé de lecture des données contenues dans un transpondeur passif incorporé dans un bandage pneumatique (1) selon la revendication précédente dans lequel l'antenne rayonnante de lecteur radiofréquence est positionnée en contact sur la surface extérieure (14) du bandage pneumatique (1).

## Patentansprüche

1. Reifen (1), welcher mit einem passiven Transponder (150) ausgestattet ist, wobei der Reifen (1) von toroidaler Form ist, die in jedem Punkt die axiale, die radiale und die Umfangsrichtung in Bezug auf einen Mittelpunkt (200) des Reifens (1) definiert, eine radial innere Fläche (13) und eine radial äußere Fläche (14) aufweist, einen Scheitel (S), zwei Seitenwände (F) und zwei Wülste (B) umfasst, wobei jeder Wulst (B) wenigstens einen ringförmigen Wulstkern (2) aufweist, der rotationssymmetrisch um eine Bezugsachse (201) ist, welche die axiale Richtung von dem Mittelpunkt (200) des Reifens (1) aus definiert, wenigstens eine Karkassenlage (3) von toroidaler Form, wenigstens einen inneren Gummi (4), wenigstens einen Protektor (6) von toroidaler Form, der aus wenigstens einer radial innerhalb des Wulstkerns (2), der Karkassenlage (3) und des inneren Gummis (4) angeordneten Schicht aus Elastomermischung besteht und der ein erstes Ende (9), das sich axial innen und radial außen befindet, und ein "Gummispitze" genanntes zweites Ende (7), das sich axial innen und radial innen befindet, aufweist, wobei der passive Transponder (150) wenigstens eine metallische Ader umfasst, die eine strahlende Halbwellendipolantenne (151) bildet, die eine Längsachse (101) definiert und geeignet ist, eine elektrische Kopplung mit wenigstens einem Mikrochip (152) zu erzeugen, wobei die Längsachse (101) im Wesentlichen senkrecht zu den Drähten (15) der Karkassenlage (3) positioniert ist, wobei der passive Transponder (150) in eine elektrisch isolierende Elastomermischung eingebettet ist, die einen Flicken (100) bildet, der auf seinem Umfang eine in Bezug auf den Mittelpunkt (200) axial außen angeordnete erste Seite (131) und eine in Bezug auf den Mittelpunkt (200) axial innen angeordnete zweite Seite (132) aufweist, die im Wesentlichen senkrecht zu der Bezugsachse (201) sind, wobei wenigstens ein radial innen befindliches Ende (141) bzw. ein radial außen befindliches Ende (142), bezogen auf die Bezugsachse (201), dem minimalen Abstand bzw. dem maximalen Abstand zwischen dem Flicken (100) und der Bezugsachse (201) entspricht, **dadurch gekennzeichnet, dass** sich wenigstens eine der Seiten (131, 132) des Flickens (100) axial zwischen dem axial inneren Ende der Karkassenlage (3) und der inneren Fläche (13) des Reifens (1) erstreckt, und dadurch, dass sich wenigstens eines der Enden (141, 142) des Flickens (100) radial in einem Abstand erstreckt, der zwischen demjenigen der Gummispitze (7) und demjenigen des radial äußeren Endes des Wulstkerns (12) liegt.

2. Reifen (1) nach Anspruch 1, wobei der Hochfrequenz-Transponder (150) über Funkwellen mit einer Frequenz kommuniziert, die zum UHF-Band gehört.

3. Reifen (1) nach einem der vorhergehenden Ansprüche, wobei die elektrische Kopplung zwischen der strahlenden Antenne (151) und dem Mikrochip (152) eine zusätzliche Antenne erfordert, die mit dem Mikrochip (152) elektrisch verbunden ist und mit der strahlenden Antenne (151) induktiv gekoppelt ist.

4. Reifen (1) nach einem der vorhergehenden Ansprüche, wobei die strahlenden Antenne (151) des passiven Transponders (150) spiralförmig ist.

5. Reifen (1) nach einem der vorhergehenden Ansprüche, wobei der Flicken (100) eine Dicke der elektrisch isolierenden Elastomermischung aufweist, die größer oder gleich 1,5 Millimeter und kleiner oder gleich 5 Millimeter ist.

6. Reifen (1) nach einem der vorhergehenden Ansprüche, wobei der Abstand zwischen der axial außen befindlichen Seite (131) des Flickens (100) und der strahlenden Antenne (151) des passiven Transponders (150) mindestens 1 Millimeter beträgt.

7. Reifen (1) nach einem der vorhergehenden Ansprüche, wobei der Abstand zwischen der axial innen befindlichen Seite (132) des Flickens (100) und der strahlenden Antenne (151) des passiven Transponders (150) mindestens 0,5 Millimeter beträgt.

8. Reifen (1) nach einem der vorhergehenden Ansprüche, wobei der Mikrochip (152) mit einer gedruckten Schaltung elektrisch verbunden ist, um eine Leiterplatte zu bilden, wobei die gedruckte Schaltung ein oder mehrere zusätzliche passive oder aktive elektronische Bauelemente aufweist.

9. Reifen (1) nach einem der vorhergehenden Ansprüche, wobei sich das radial innen befindliche Ende (141) des Flickens (100) radial in einem Abstand (D) von mindestens fünf Millimetern von der Gummispitze (7) des Protektors (6) befindet.

10. Reifen (1) nach einem der vorhergehenden Ansprüche, wobei der Flicken (100) an der axial außen befindlichen Seite (131) auf der inneren Fläche (13) des Reifens (1) befestigt ist.

11. Reifen (1) nach Anspruch 9, wobei der Flicken (100) auf der inneren Fläche (13) des Reifens (1) zwischen der Gummispitze (7) und dem radial außen und axial innen befindlichen Ende (9) des Protektors (6) positioniert ist.

12. Reifen (1) nach einem der vorhergehenden Ansprüche, wobei der Flicken (100) aus einer Elastomermischung besteht, die mindestens eines der folgenden Elemente umfasst: Naturkautschuk, Butyl und Ethylen-Propylen-Dien-Monomer.

13. Reifen (1) nach Anspruch 11, wobei der Flicken (100) wenigstens teilweise von einem Verbindungsgummi (123) bedeckt wird, dessen Dicke mindestens 0,5 Millimeter beträgt.

14. Verfahren zum Lesen der Daten, die in einem passiven Transponder enthalten sind, der in einen Reifen (1) nach einem der vorhergehenden Ansprüche integriert ist, der auf einem Metallrad (8) montiert und aufgepumpt ist, die folgenden Schritte umfassend:
- Positionieren eines Hochfrequenzlesers, der eine strahlende Antenne umfasst, senkrecht zur äußeren Fläche (14) des Reifens (1), wobei die strahlende Antenne in einem Abstand von der äußeren Fläche (14), der kleiner oder gleich 20 Zentimeter ist, an der radialen Einbauebene des passiven Transponders (150) positioniert wird;
- radiales Scannen der äußeren Fläche (14) von der halben Höhe des Reifens (1) aus in Richtung der Bezugsachse (201).

15. Verfahren zum Lesen der Daten, die in einem in einen Reifen (1) integrierten passiven Transponder enthalten sind, nach dem vorhergehenden Anspruch, wobei die strahlende Antenne des Hochfrequenzlesers in Kontakt mit der äußeren Fläche (14) des Reifens (1) positioniert wird.

## Claims

1. Pneumatic tyre (1) provided with a passive transponder (150), said pneumatic tyre (1) of toroidal form defining at any point the axial, radial and circumferential directions with respect to a centre (200) of the pneumatic tyre (1), having a radially inner surface (13) and a radially outer surface (14), comprising a crown (S), two sidewalls (F) and two beads (B), each bead (B) having at least one annular bead core (2) that rotates about a reference axis (201) defining the axial direction from the centre (200) of said pneumatic tyre (1), at least one carcass ply (3) of toroidal form, at least one inner liner (4), at least one protector (6) of toroidal form, which protector is made up of at least one elastomeric blend layer placed radially inwardly of said bead core (2), said carcass ply (3) and said inner liner (4), including a first end (9), located axially inwardly and radially outwardly, and a second end called a bead toe (7) located axially inwardly and radially inwardly, said passive transponder (150) comprising at least one metal strand forming a radiating half-wave dipole antenna (151) defining a longitudinal axis (101) and capable of creating an electrical coupling with at least one electronic chip (152), said longitudinal axis (101) is positioned substantially perpendicular to the threads (15) of said carcass ply (3), said passive transponder (150) being embedded in an electrically insulating elastomeric blend forming a patch (100), having, on the periphery thereof, a first face (131) sited axially outwardly with respect to the centre (200) and a second face (132) sited axially inwardly with respect to the centre (200), which are substantially perpendicular to said reference axis (201), at least one end located radially inwardly (141), and one end located radially outwardly (142), respectively, relative to the reference axis (201) corresponding to the minimum distance and the maximum distance, respectively, between said patch (100) and said reference axis (201), **characterized in that** at least one of the faces (131, 132) of the patch (100) extends axially between the axially inner end of the carcass ply (3) and the inner surface (13) of the pneumatic tyre (1) and **in that** at least one of the ends (141, 142) of the patch (100) extends radially at a distance between that of the bead toe (7) and that of the bead core radially-outer end (12).

2. Pneumatic tyre (1) according to Claim 1, wherein the passive radio frequency transponder (150) communicates via radio waves at a frequency belonging to the UHF band.

3. Pneumatic tyre (1) according one of the preceding claims, wherein the electrical coupling between said radiating antenna (151) and said electronic chip (152) requires an additional antenna electrically connected to said electronic chip (152) and inductively coupled to said radiating antenna (151).

4. Pneumatic tyre (1) according to one of the preceding claims, wherein said radiating antenna (151) of said passive transponder (150) is of helical form.

5. Pneumatic tyre (1) according to one of the preceding claims, wherein said patch (100) includes an electrically insulating elastomeric blend thickness greater than or equal to 1.5 millimetres and less than or equal to 5 millimetres.

6. Pneumatic tyre (1) according to one of the preceding claims, wherein the distance between said axially outwardly-located face (131) of said patch (100) and said radiating antenna (151) of said passive transponder (150) is at least 1 millimetre.

7. Pneumatic tyre (1) according to one of the preceding claims, wherein the distance between said axially inwardly-located face (132) of said patch (100) and said radiating antenna (151) of said passive transponder (150) is at least 0.5 millimetres.

8. Pneumatic tyre (1) according to one of the preceding claims, wherein, since the electronic chip (152) is electrically connected to a printed circuit to form an electronic board, said printed circuit includes one or more additional passive or active electronic components.

9. Pneumatic tyre (1) according to one of the preceding claims, wherein the radially inwardly-located end (141) of said patch (100) is located radially at a distance (D), of at least five millimetres, from said bead toe (7) of said protector (6).

10. Pneumatic tyre (1) according to one of the preceding claims, wherein said patch (100) is fixed at said axially outwardly-located face (131) on the inner surface (13) of the pneumatic tyre (1).

11. Pneumatic tyre (1) according to Claim 9, wherein said patch (100) is positioned on the inner surface (13) of said pneumatic tyre (1) between said bead toe (7) and said radially outwardly- and axially inwardly-located end (9) of said protector (6).

12. Pneumatic tyre (1) according to any one of the preceding claims, wherein said patch (100) is made up of an elastomeric blend comprising at least one of the following elements: natural rubber, butyl and ethylene propylene diene monomer.

13. Pneumatic tyre (1) according to Claim 11, wherein said patch (100) is at least partially covered by a bonding rubber (123) having a thickness of at least 0.5 millimetres.

14. Method for reading the data contained in a passive transponder incorporated in a pneumatic tyre (1) according to one of the preceding claims, mounted on a metal wheel (8) and inflated, comprising the following steps:
- Positioning a radio frequency reader comprising a radiating antenna in a perpendicular manner to the outer surface (14) of the pneumatic tyre (1) by positioning said radiating antenna at a distance less than or equal to 20 centimetres from said outer surface (14) at the radial plane for fitting said passive transponder (150);
- Radially scanning said outer surface (14) from the mid-height of said pneumatic tyre (1) towards the reference axis (201).

15. Method for reading the data contained in a passive transponder U incorporated in a pneumatic tyre (1) according to the preceding claim, wherein the radio frequency reader radiating antenna is positioned in contact with the outer surface (14) of the pneumatic tyre (1).
